# EUROPÄISCHE PATENTSCHRIFT

(11) **EP 1 452 452 B1**
(45) Veröffentlichungstag und Bekanntmachung des Hinweises auf die Patenterteilung: **02.11.2006**
(21) Anmeldenummer: 04007311.6
(22) Anmeldetag: 21.01.2000
(51) Int. Cl.: B65B 51/14

(54) **Verfahren und Vorrichtung zum Herstellen von (Zigaretten-) Packungen**
Method and apparatus for manufacturing (cigarettes-) packages.
Procédé et machine pour fabriquer des emballages (de cigarettes)

(30) Priorität: 03.03.1999 DE 19909161
(43) Veröffentlichungstag der Anmeldung: 01.09.2004
(62) Teilanmeldung aus: 00101151.9
(73) Patentinhaber: Focke & Co. (GmbH & Co. KG), 27283 Verden (DE)
(72) Erfinder: Focke, Heinz, 27283 Verden (DE); Häfker, Thomas, 27299 Langwedel-Etelsen (DE); Köster, Johann, 27283 Verden (DE)
(74) Vertreter: Bolte, Erich

(56) Entgegenhaltungen:
- EP-A- 0 395 809
- US-A- 4 220 847
- US-A- 4 330 977
- US-A- 4 671 045
- US-A- 4 843 800
- US-A- 4 932 190

## Beschreibung

Die Erfindung betrifft eine Vorrichtung zum Herstellen von quaderförmigen Packungen mit einer Außenumhüllung aus siegelbarem Verpackungsmaterial, welches im Bereich eines Siegelaggregats an einander gegenüberliegenden Packungsflächen durch seitlich angeordnete Siegelorgane während des Transports der Packungen entlang einer horizontalen Förderstrecke siegelbar ist, wobei die mit der Außenumhüllung versehenen Packungen durch einen Aufrechtförderer dem Siegelaggregat durch Aufwärtsbewegung zuführbar sind und wobei im Bereich von seitlichen Siegelbacken des Siegelaggregats die Packungen durch einen horizontalen Packungsförderer transportierbar sind, wobei die Packungsflächen seitwärts gerichtet sind. Eine solche Vorrichtung ist aus der US-A-4 843 800 bekannt.

Gebindepackungen bestehen aus einer üblicherweise von einer Außenumhüllung umgebenden Packungsgruppe. Bei Gebinden aus Zigarettenpackungen besteht die Packungsgruppe beispielsweise aus zehn Zigarettenpackungen, die in zwei Reihen übereinander liegen. Die Packungsgruppe wird dadurch gebildet, dass ein fortlaufender Packungsstrang aus dicht aneinanderliegenden (Zigaretten-)Packungen zugeführt und durch Querabschub die Packungsgruppe abgesondert wird. Diese wird dann einer Verpackungsstation zum Verpacken in die Außenumhüllung zugeführt.

Die zunehmende Leistungsfähigkeit von Verpackungsmaschinen, insbesondere der Zigarettenpacker, erfordert Maßnahmen für höhere Leistungen eines Gebindepackers bzw. weiterer an eine Verpackungsmaschine anschließender Förder- und Handhabungsaggregate für die Packungen, ohne dass diese unerwünschten mechanischen Belastungen ausgesetzt sind.

Der Erfindung liegt die Aufgabe zugrunde, Maßnahmen für die Handhabung von (Zigaretten-)Packungen im Anschluss an die Verpackungsmaschine, nämlich insbesondere bei der Herstellung von Gebindepackungen, vorzuschlagen, die eine höhere Leistung, also größere Arbeitsgeschwindigkeit bei Vermeidung insbesondere mechanischer Beanspruchung der Packungen ermöglichen.

Zur Lösung dieser Aufgabe ist die erfindungsgemäße Vorrichtung der eingangs genannten Art gekennzeichnet durch folgende Merkmale:
a) der Packungsförderer weist von einem Endlosförderer quer abstehende Mitnehmer auf zur seitlichen Begrenzung von Taschen für Packungen,
b) die Abmessung der durch die Mitnehmer begrenzten Tasche entspricht etwa der Abmessung einer Packung,
c) jeder Mitnehmer dient zur Abgrenzung von zwei aufeinanderfolgenden Taschen,
d) Packungen sind durch einen nach unten gerichteten Fördertrum des Taschenförderers transportierbar, wobei die Packungen während des Transports durch den Taschenförderer auf einer feststehenden Unterlage gleitend aufliegen,
e) die durch den Taschenförderer transportierten Packungen sind jeweils an der Oberseite des Aufrechtförderers aufeinanderfolgend durch die Mitnehmer erfassbar und durch Querabschub förderbar,
f) im Bereich einer Umlenkung des Taschenförderers sind die Packungen durch Öffnen der Tasche an einen Übergabeförderer übertragbar, der die Packungen erfasst, beschleunigt und die Packungen somit aus dem Bereich des Taschenförderers wegbewegt.

Der Erfindung liegt weiter die Erkenntnis zugrunde, dass der Querschub von Packungsgruppen von einem zugeförderten Packungsstrang aus in Dichtlage angeordneten Packungen problematisch ist. Es wird durch eine Relativbewegung zunächst die Packungsgruppe freigestellt und dann abgeschoben.

Gemäß einem weiteren Merkmal der Erfindung wird der Packungsstrang entgegen der Förderrichtung zurückbewegt, und zwar unter Bildung eines größeren Abstands von der Packungsgruppe. Durch den größeren Abstand kann der Packungsstrang in Richtung auf die Abschubposition bereits beschleunigt werden, wenn ein quer wirkender Abschieber noch in der Rückkehrbewegung ist. Die Leistung der Einrichtung wird dadurch erhöht ohne Beeinträchtigung der Packungen.

Ein anderes, besonderes Thema ist die Siegelung von Zigarettenpackungen, insbesondere einer Außenumhüllung derselben aus siegelfähiger Folie. Der Abschubstation der Packungsgruppen ist eine Siegelstation bzw. ein Siegelaggregat vorgeordnet. Im Bereich desselben werden die Packungen einzeln bzw. paarweise übereinanderliegend durch einen Taschenförderer transportiert, der je eine einzelne Zigarettenpackung oder zwei übereinanderliegende aufnimmt. Seitliche Siegelorgane sind in besonderer Weise ausgebildet und zur Siegelung von seitwärts gerichteten Stirn- und Bodenflächen vorgesehen.

Weitere Merkmale der Erfindung beziehen sich auf die Ausgestaltung und Arbeitsweise von Förderorganen für (Paare) von (Zigaretten-)Packungen, des Packungsstrangs sowie des Siegelaggregats.

Weitere Einzelheiten der Erfindung werden nachfolgend anhand der Zeichnungen näher erläutert. Es zeigt:

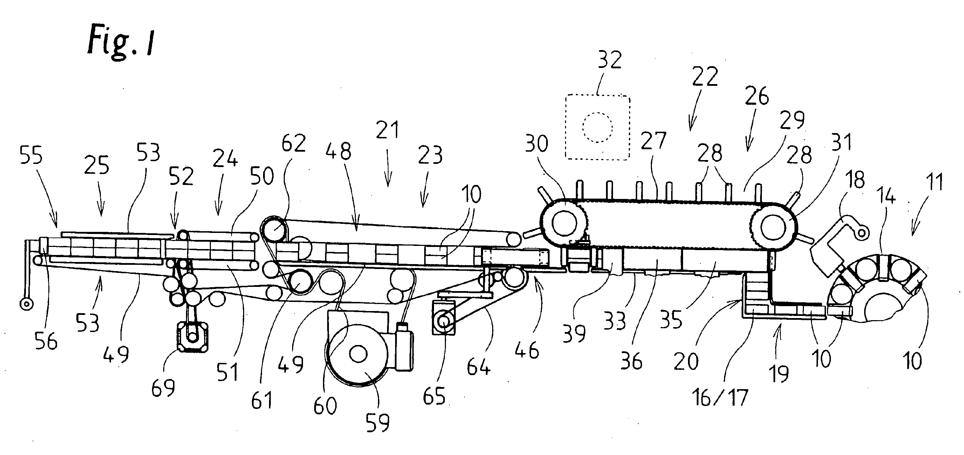

- Fig. 1: eine Vorrichtung für die Handhabung von (Zigaretten-)Packungen in Seitenansicht,
- Fig. 2: einen Teilbereich der Vorrichtung gemäß Fig. 1, nämlich ein Siegelaggregat, in vergrößertem Maßstab,
- Fig. 3: die Einzelheit der Fig. 2 mit zusätzlich dargestellten Siegelorganen,
- Fig. 4 - 6: Einzelheiten der Darstellung in Fig. 3, nämlich Querschnitte in den Schnittebenen IV, V und VI, in vergrößertem Maßstab,
- Fig. 7: einen Bereich der Vorrichtung gemäß Fig. 1 im Anschluss an die Siegelstation, in vergrößertem Maßstab,
- Fig. 8: die Einzelheit gemäß Fig. 7 bei veränderter Position von Förderorganen,
- Fig. 9: eine Einzelheit im Bereich der Siegelstation im Querschnitt derselben, bei stark vergrößertem Maßstab.

Bei den in den Zeichnungen dargestellten Packungen 10 handelt es sich um quaderförmige Zigarettenpackungen. Diese kommen von einer Verpackungsmaschine. Von dieser ist ein Faltrevolver 11 gezeigt, in dessen Bereich die Packungen 10 mit einer Außenumhüllung aus einer (siegelbaren) Folie versehen werden. Die Packungen 10 bestehen aus einander gegenüberliegender Vorderwand 12, Rückwand 13, schmalen langgestreckten Seitenwänden 14 und 15 sowie kleinen Stirnwänden 16 und 17 bzw. Stirnwand und Bodenwand. Im Bereich des Faltrevolvers 11 werden einander überdeckende Seitenlappen der Außenumhüllung im Bereich einer radial nach außen gerichteten Seitenwand 14 durch Siegeln miteinander verbunden, und zwar durch ein schwenkbares Siegelorgan 18.

Die soweit vorbereiteten Packungen 10 werden in Radialrichtung entlang einer horizontalen Mittelebene des Faltrevolvers 11 aus diesem ausgeschoben in eine Packungsbahn 19. An diese schließt ein Aufrechtförderer 20 an, der die Packungen an eine horizontale Förderstrecke 21 übergibt. Im Bereich dieser Förderstrecke 21 werden die Packungen 10 in kleinen Gruppen gefördert, nämlich mit je zwei übereinander angeordneten Packungen 10. Diese liegen dabei mit Vorderwand 12 und Rückwand 13 aneinander. Die Seitenwände 14, 15 erstrecken sich quer zur Förderrichtung. Die Stirnwände 16 und 17 sind seitwärts gerichtet.

Im Bereich der Förderstrecke 21 gelangen die Packungen 10 zuerst in ein Siegelaggregat 22 zum Siegeln der Außenumhüllung im Bereich der seitwärts gerichteten Stirnwände 16, 17. Danach werden die Packungen 10 von einem Zwischenförderer 23 übernommen. Es folgt ein Stauförderer 24 und schließlich eine Abschubstation 25.

Der erste Abschnitt der Förderstrecke 21 ist als Taschenförderer 26 ausgebildet, als Teil des Siegelaggregats 22. Der Taschenförderer 26 besteht aus einem Endlosförderer, nämlich einem Zahnriemen 27 mit nach außen abstehenden Mitnehmern 28. Diese sind als quer abstehende Stege ausgebildet, die sich etwa über die Breite des Zahnriemens 27 erstrecken. Diese wiederum haben eine geringere Breite als die Packungen 10 quer zum Zahnriemen 27.

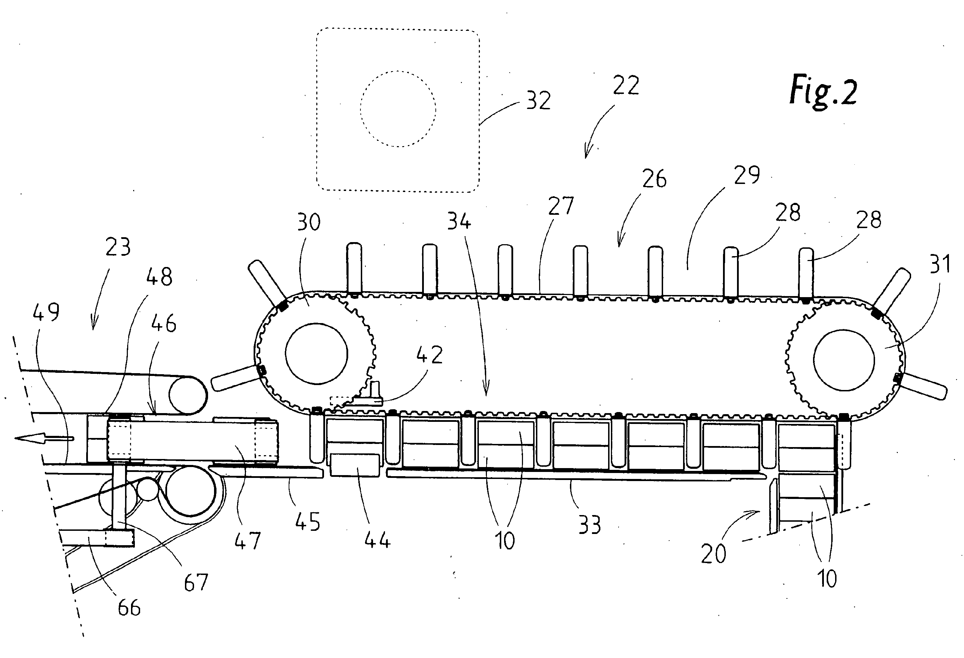

Zwei benachbarte Mitnehmer 28 bilden eine Tasche 29, in der zwei übereinander angeordnete Packungen 10 Aufnahme finden. Die Abmessung der Mitnehmer 28 senkrecht zum Zahnriemen 27 ist etwas geringer als die Abmessung der beiden übereinander angeordneten Packungen 10 (z.B. Fig. 2).

Der Zahnriemen 27 läuft über Zahnräder 30, 31, von denen ein Zahnrad, z.B. Zahnrad 30, angetrieben ist, und zwar durch einen Servomotor 32. Die Zahnräder 30, 31 als Umlenkorgane für den Zahnriemen 27 bewirken ein Öffnen und Schließen der Taschen 29. Dadurch ist es möglich, (zwei) Packungen 10 im Bereich des Aufrechtförderers 20 zu übernehmen, nämlich von einem hier gebildeten Stapel von Packungen 10 abzuschieben (z.B. Fig. 2). Der Taschenförderer 26 ist zu diesem Zweck oberhalb der Bewegungsbahn der Packungen 10 und oberhalb des Aufrechtförderers 20 positioniert. Die Packungen 10 werden auf einer horizontalen Unterlage 33 (gleitend) transportiert, und zwar infolge Mitnahme durch die aufeinanderfolgenden Mitnehmer 28, die je in eine Lücke zwischen aufeinanderfolgenden Zweiergruppen von Packungen 10 eintreten.

Die Packungen 10 werden vom Taschenförderer 26 im Bereich des Zahnrads 30 an den Zwischenförderer 23 übergeben und von diesem weitertransportiert. Im Bereich des Taschenförderers 26 findet eine Behandlung der Packungen 10 statt, und zwar eine Siegelung im Bereich der seitwärts gerichteten Stirnwände 16, 17.

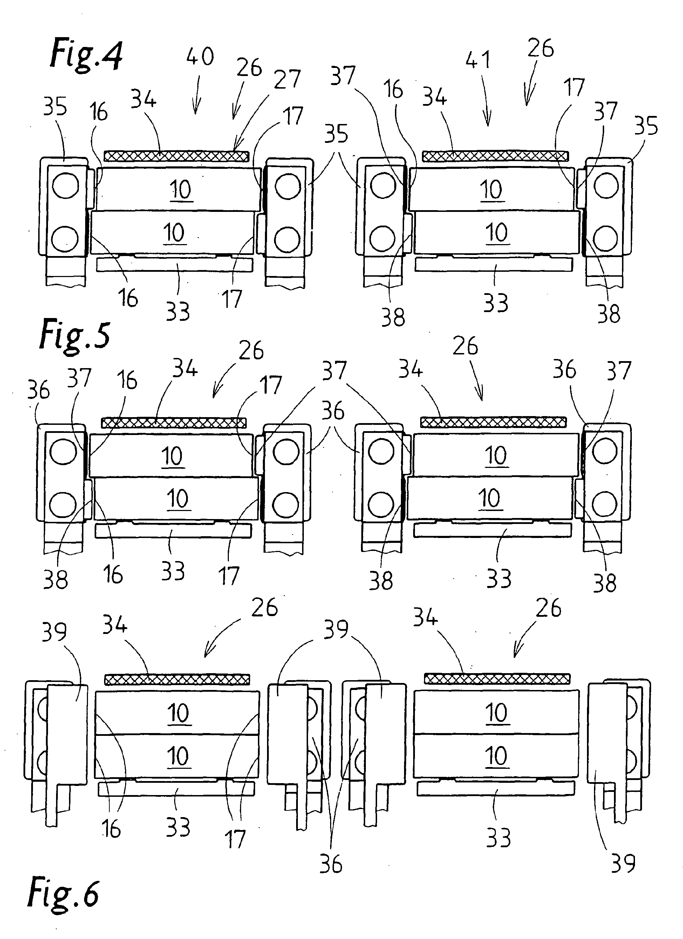

Zu diesem Zweck sind einem unteren Fördertrum 34 des Taschenförderers 26 Siegelorgane zugeordnet, nämlich plattenförmige Siegelbacken 35, 36. Es handelt sich dabei um plattenförmige, beheizte und druckbeaufschlagte Organe, die zu beiden Seiten der Bewegungsbahn der Packungen 10 positioniert sind (Fig. 4 und Fig. 5). Die Siegelbacken 35, 36 werden an die Stirnwände 16, 17 der Packungen 10 angedrückt. Die in Förderrichtung ersten Siegelbacken 35 sind so bemessen, dass sie den Bereich von drei Taschen 29, also von drei Paaren von Packungen 10 erfassen, während die zweiten Siegelbacken 36 sich über zwei Taschen 29 erstrecken. Der Taschenförderer 26 ist taktweise angetrieben, derart, dass die Siegelung während einer momentanen Stillstandsphase durchgeführt wird. Die Siegelbacken 35, 36 werden danach von den Stirnwänden 16, 17 zurückbewegt und der Taschenförderer 26 kann mit den Packungen 10 um eine Station, nämlich um das Maß einer Tasche 29, weiterbewegt werden. Es findet dann ein erneuter Siegeltakt statt, so dass die Packungen 10 über mehrere Takte hinweg nach und nach gesiegelt werden. Die Siegelbacken 35, 36 können je nach dem zu siegelnden Material unterschiedliche Temperaturen und/oder Siegelzeiten und/oder Andrückkräfte aufweisen.

Eine Besonderheit ist die Gestaltung von den Packungen 10 zugekehrten Siegelflächen der Siegelbacken 35, 36. Diese sind versetzt zueinander angeordnet, und zwar derart, dass obere und untere Siegelflächen 37, 38 je einer Stirnwand 16, 17 zugeordnet und gegeneinander versetzt sind. Die Siegelbacken 35, 36 auf den einander gegenüberliegenden Seiten sind mit korrespondierend ausgebildeten Siegelflächen 37, 38 versehen, so dass beim Andrücken der Siegelbacken 35, 36 an die Stirnwände 16, 17 die übereinanderliegenden Packungen 10 leicht gegeneinander verschoben werden (Fig. 4 und Fig. 5). Dadurch wird verhindert, dass beim Siegeln der Außenfolie die benachbarten Packungen 10 miteinander verbunden werden. Die Siegelflächen 37, 38 sind auch in Förderrichtung der Packungen 10 unterschiedlich, korrespondierend gestaltet, nämlich von Siegelbacken 35 zu Siegelbacken 36, derart, dass unterschiedliche Relativstellungen während des Siegelns in diesen Bereichen geschaffen werden.

Im Anschluss an die Siegelbacken 35, 36 werden die übereinander liegenden Packungen 10 in den Taschen 29 ausgerichtet, und zwar durch seitlich angeordnete, ebenfalls gegen die Stirnwände 16, 17 bewegbare Ausrichter 39.

Wie des weiteren aus Fig. 4, Fig. 5 und Fig. 6 ersichtlich, ist die Vorrichtung auf zweibahnige Betriebsweise ausgelegt mit den parallel nebeneinander laufenden, eigenständigen Bahnen 40, 41.

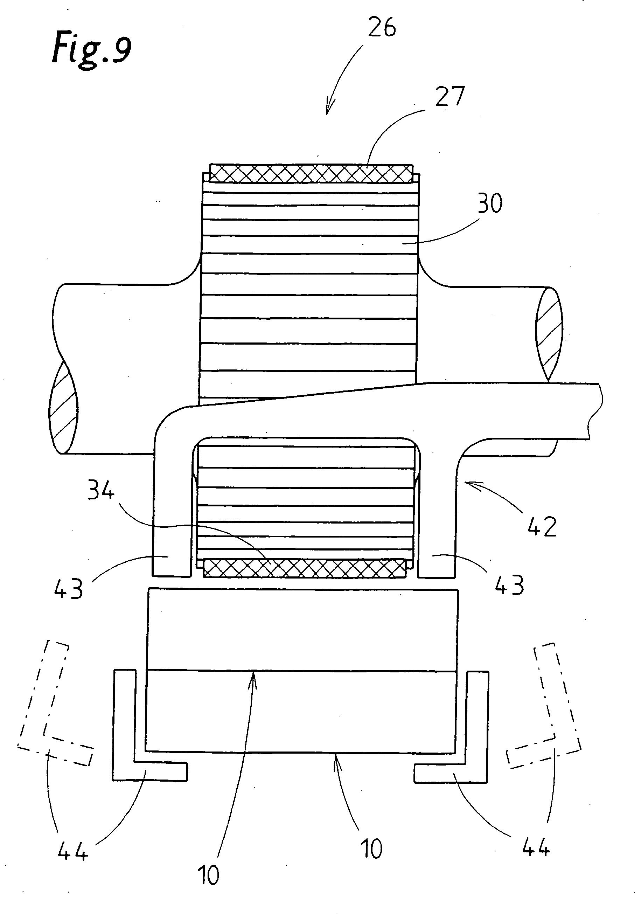

Benachbart zum Umlenkrad bzw. Zahnrad 30 ist ein Auswerfer 42 positioniert, oberhalb des Fördertrums 34. Der gabelförmige Auswerfer 42 sondert eventuell fehlerhafte Packungen 10 aus dem weiteren Förderprozess aus. Der Auswerfer 42 drückt zu diesem Zweck mit seitlich neben dem Zahnriemen 27 wirkenden Schenkeln 43 die Packungen 10 nach unten aus. Diese sind im Bereich des Auswerfers 42 unten durch bewegbare Tragorgane abgestützt, nämlich durch Tragschenkel 44, die zum Auswerfen von fehlerhaften Packungen 10 seitwärts bewegt werden (strichpunktiert in Fig. 9).

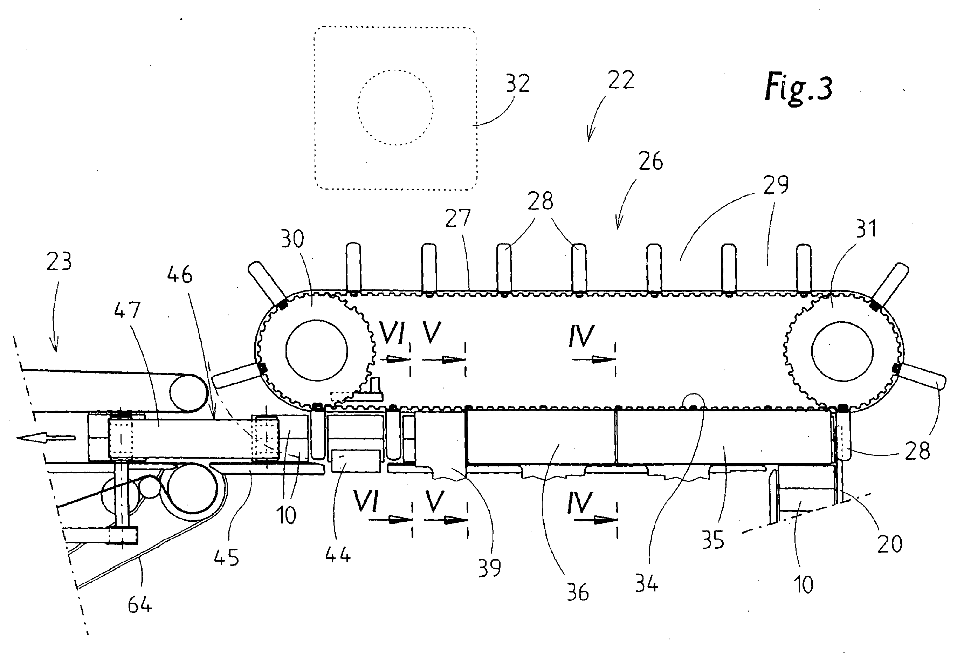

Die Packungen 10 werden von dem Taschenförderer 26 im Bereich des Zahnrads 30 auf einen Zwischenträger aufgeschoben, nämlich auf eine Brückenplatte 45. Im Bereich derselben werden die von einer Tasche 29 freigegebenen Packungen 10 von einem Übergabeförderer 46 erfasst. Dieser besteht aus zwei einander gegenüber liegenden, seitlichen Gurten 47. Die Packungen 10 gelangen in unveränderter Relativstellung in den Bereich zwischen den einander gegenüberliegenden Gurten 47 und werden - bei erhöhter Geschwindigkeit - weitergefördert. Die Übergabe der Packungen vom Taschenförderer 26 an den Übergabeförderer 46 erfolgt durch die Bewegung der Mitnehmer 28 längs eines Kreisbogens. Die Packungen werden vollständig in den Bereich des Übergabeförderers 46 eingefördert (Fig. 3).

Der Übergabeförderer 46 transportiert die Packungen 10 in den Bereich des Zwischenförderers 23, der aus einem Obergurt 48 und einem Untergurt 49 besteht. In diesem Bereich werden demnach die (zwei) Packungen 10 oben und unten, also im Bereich der großflächigen Vorderwände 12 und Rückwände 13, erfasst und weitertransportiert. Aufgrund der größeren Antriebsgeschwindigkeit des Übergabeförderers 46 sowie des Zwischenförderers 23 wird zwischen den aufeinanderfolgenden (Paaren von) Packungen ein größerer Abstand geschaffen.

Die Zweiergruppen der Packungen 10 werden von dem Zwischenförderer 23 an den ebenfalls aus einem Oberband 50 und einem Unterband 51 bestehenden Stauförderer übergeben. In diesem Bereich werden die Packungen 10 angestaut, so dass ein Packungsstrang 52 aus in Dichtlage aufeinander folgenden Packungen 10 gebildet wird, und zwar jeweils zwei ausgerichtet übereinander. Dieser durchgehende Packungsstrang 52 erstreckt sich bis in den Bereich der Abschubstation 25. In diesem Bereich werden die Packungen 10 durch einen Unterförderer 53 transportiert. An der Oberseite befindet sich eine Abdeckplatte 54.

Die Abschubstation 25 bzw. die Länge des Unterförderers 53 und der Abdeckplatte 54 entsprechen etwa der Länge einer abzuschiebenden Packungsgruppe 55 aus fünf Paaren von übereinander angeordneten Packungen 10. Der Stau bzw. der Packungsstrang 52 wird dadurch gebildet, dass die Packungen 10 gegen einen Endanschlag 56 gefördert werden. Dieser ist in Förderrichtung bewegbar durch Anordnung an einem Schwenkarm 57. Die vollständige Packungsgruppe 55 wird durch einen quer bewegbaren Abschieber 58 aus dem Bereich der Abschubstation 25 quer zur Förderrichtung herausbewegt.

Eine Besonderheit besteht darin, dass die abzuschiebende Packungsgruppe 55 vor dem Abschub von dem nachfolgenden Packungsstrang 52 abgesondert wird, so dass eine Lücke zwischen Packungsgruppe 55 und Packungsstrang 52 gegeben ist.

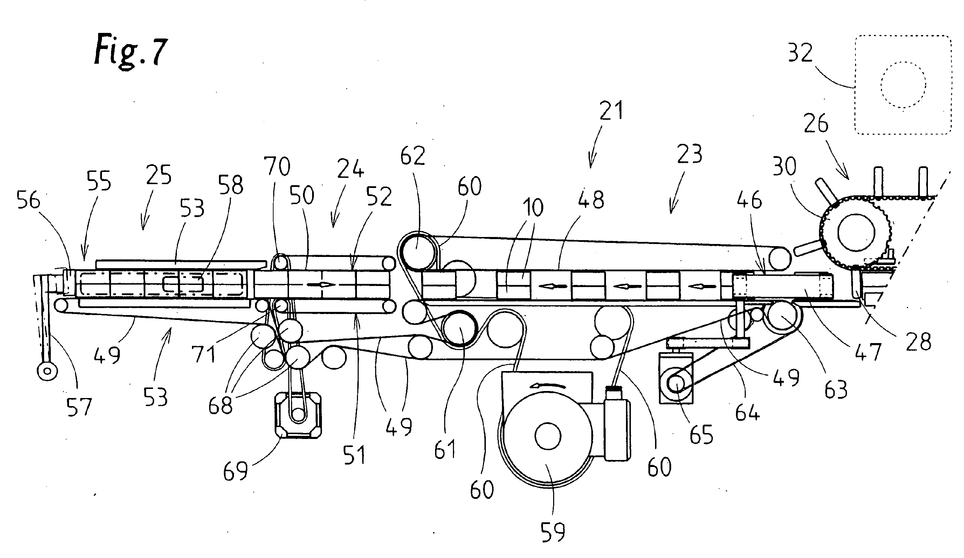

Die Absonderung der Packungsgruppe 55 vom Packungsstrang 52 wird durch mehrere Maßnahmen erreicht. Zum einen wird nach Anlage des Packungsstrangs 52 am Endanschlag 56 dieser in Förderrichtung weiterbewegt (strichpunktierte Position in Fig. 7), während der Packungsstrang 52 im Bereich des Stauförderers 24 angehalten wird. Dadurch entsteht eine erste Lücke.

Eine weitere wichtige Maßnahme ist eine Rückförderung des Packungsstrangs 52 durch entsprechend gegenläufigen Antrieb des Stauförderers 24 (Fig. 7). Der von der Packungsgruppe 55 abgeteilte Packungsstrang 52 wird in entgegengesetzter Richtung gefördert, und zwar unter Aufnahme von weiteren Paaren von Packungen 10 bis in den Bereich des Zwischenförderers 23. Dadurch wird zum einen der Packungsstrang 52 vergrößert und zum anderen eine verhältnismäßig große Lücke gegenüber der abzuschiebenden Packungsgruppe 55 geschaffen.

Der Abschubvorgang für die Packungsgruppe 55 und die Rückförderbewegung des Packungsstrangs 52 sind zeitlich überlagert. Von besonderer Wichtigkeit ist aber, dass der Packungsstrang 52 durch (erneute) Umkehr der Förderrichtung zur Abschubstation 25 gefördert werden kann, während sich der Abschieber 58 noch in der Rückkehrbewegung in die Ausgangsstellung befindet. Wenn dieser die Ausgangsstellung erreicht hat, kann der Packungsstrang 52 mit hoher bzw. maximaler Fördergeschwindigkeit in die Abschubstation 25 einlaufen, so dass eine beachtliche Zeitersparnis erzielt ist.

Die Förderorgane der Einrichtung sind in besonderer Weise angetrieben bzw. hinsichtlich des Antriebs und der Ausgestaltung aufeinander abgestimmt.

Der dem Taschenförderer 26 zugeordnete Servomotor 32 bewirkt den taktweisen Antrieb des Taschenförderers 26, bewegt aber auch über entsprechende Getriebe die Siegelbacken 35, 36 sowie den Ausrichter 39. Des weiteren wird der Auswerfer 42 von dem Servomotor 32 betätigt. Die Bewegungen werden über entsprechende Kurven gesteuert. Der Servomotor 32 wird von der Hauptmaschine gesteuert über einen Drehgeber (Inkrementalgeber). Die Maximalgeschwindigkeit des Taschenförderers 26 kann z.B. etwa 14 m/min. betragen.

Der Zwischenförderer 23 wird von einem eigenen Motor angetrieben, und zwar von einem Drehstrommotor 59. Dieser ist über einen Antriebsgurt 60 mit Antriebsrädern 61, 62 für den Obergurt 48 und Untergurt 49 des Zwischenförderers 23 verbunden. Der Drehstrommotor 59 läuft stets mit der Maximalgeschwindigkeit, z.B. von etwa 49,4 m/min. Der Antriebsgurt 60 ist als zweiseitiger Zahnriemen ausgebildet.

Der Übergabeförderer 46 wird (indirekt) durch den Zwischenförderer 23 mit angetrieben, also durch den Drehstrommotor 59. Der Antrieb vollzieht sich über ein Umlenkrad 63 des Untergurts 49. Von diesem führt ein Antrieb 64 zu einem Getriebe, nämlich Winkelgetriebe 65. Dieses wirkt über einen Antriebsriemen 66 und eine Antriebswelle 67 auf den Übergabeförderer 46. Der Übergabeförderer 46 kann so mit der Maximalgeschwindigkeit der Maschine angetrieben werden, so dass die Packungen 10 aus der sich öffnenden Tasche 29 abgefördert werden können.

Der Untergurt 49 des Zwischenförderers 23 erstreckt sich unter Umgehung des Stauförderers 24 in den Bereich der Abschubstation 25 unter Bildung des Unterförderers 53 desselben. Der Untergurt 49 ist dabei über mehrere Umlenkrollen 68 geführt.

Dem Stauförderer 24 ist ein eigenständiger Antrieb zugeordnet, nämlich ein Servoantrieb 69. Dieser ermöglicht eine Förderbewegung des Stauförderers 24 bzw. von Oberband 50 und Unterband 51 in zwei Richtungen. Der Servoantrieb 69 wirkt über Antriebsgurte auf Antriebsrollen 70, 71 vom Oberband 50 und Unterband 51.

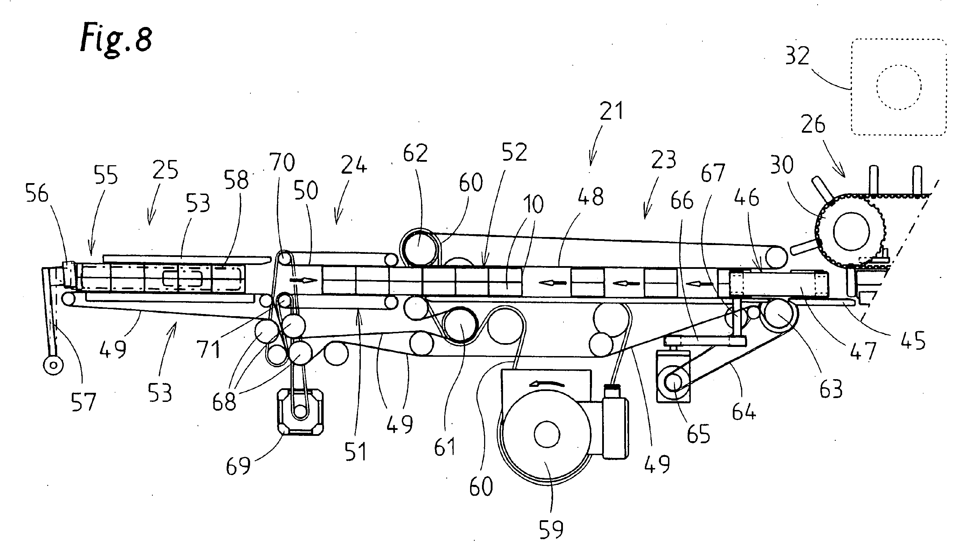

Um die beschriebene gegenläufige Bewegung des Packungsstrangs 52 zu gewährleisten, sind die Packungen 10 zwischen Oberband 50 und Unterband 51 des Stauförderers 24 mit erhöhter Haltekraft fixiert. Hingegen sind die Abstände von Obergurt 48 und Untergurt 49 des Zwischenförderers 23 so gewählt, dass der Packungsstrang 52 gegen die aufrechterhaltene Förderbewegung des Zwischenförderers 23 in dessen Bereich gelangen kann (Fig. 8). Die Oberflächen der Gurte können so ausgebildet sein, dass dieser Bewegungsablauf unterstützt wird.

Die Abmessungen können vorteilhafterweise so gewählt sein, dass der Packungsstrang 52 nach dem Absondern von der Packungsgruppe 55 um etwa 100 mm entgegen der Förderrichtung zurückbewegt wird in die Position gemäß Fig. 8. Der Bewegungshub des Endanschlags 56 kann 10 mm betragen. Der Abschub der Packungsgruppe 55 erfolgt, wenn sich der Endanschlag 56 in der zurückgezogenen Position befindet, so dass die Packungsgruppe 55 an beiden Seiten frei ist.

Die einzelnen Förderorgane der Vorrichtung können auch in einem anderen Zusammenhang in der beschriebenen Weise eingesetzt werden.

### Bezugszeichenliste:

- 10: Packung
- 11: Faltrevolver
- 12: Vorderwand
- 13: Rückwand
- 14: Seitenwand
- 15: Seitenwand
- 16: Stirnwand
- 17: Stirnwand
- 18: Siegelorgan
- 19: Packungsbahn
- 20: Aufrechtförderer
- 21: Förderstrecke
- 22: Siegelaggregat
- 23: Zwischenförderer
- 24: Stauförderer
- 25: Abschubstation
- 26: Taschenförderer
- 27: Zahnriemen
- 28: Mitnehmer
- 29: Tasche
- 30: Zahnrad
- 31: Zahnrad
- 32: Servomotor
- 33: Unterlage
- 34: Fördertrum
- 35: Siegelbacke
- 36: Siegelbacke
- 37: Siegelfläche
- 38: Siegelfläche
- 39: Ausrichter
- 40: Bahn
- 41: Bahn
- 42: Auswerfer
- 43: Schenkel
- 44: Tragschenkel
- 45: Brückenplatte
- 46: Übergabeförderer
- 47: Gurt
- 48: Obergurt
- 49: Untergurt
- 50: Oberband
- 51: Unterband
- 52: Packungsstrang
- 53: Unterförderer
- 54: Abdeckplatte
- 55: Packungsgruppe
- 56: Endanschlag
- 57: Schwenkarm
- 58: Abschieber
- 59: Drehstrommotor
- 60: Antriebsgurt
- 61: Antriebsrad
- 62: Antriebsrad
- 63: Umlenkrad
- 64: Antrieb
- 65: Winkelgetriebe
- 66: Antriebsriemen
- 67: Antriebswelle
- 68: Umlenkrolle
- 69: Servoantrieb
- 70: Antriebsrolle
- 71: Antriebsrolle

## Patentansprüche

1. Vorrichtung zum Herstellen von quaderförmigen Packungen (10) mit einer Außenumhüllung aus siegelbarem Verpackungsmaterial, welches im Bereich eines Siegelaggregats (22) an einander gegenüberliegenden Packungsflächen (16, 17) durch seitlich angeordnete Siegelorgane während des Transports der Packungen (10) entlang einer horizontalen Förderstrecke siegelbar ist, wobei die mit der Außenumhüllung versehenen Packungen (10) durch einen Aufrechtförderer (20) dem Siegelaggregat (22) durch Aufwärtsbewegung zuführbar sind und wobei im Bereich von seitlichen Siegelbacken (35, 36) des Siegelaggregats (22) die Packungen (10) durch einen horizontalen Packungsförderer (26) transportierbar sind, wobei die Packungsflächen seitwärts gerichtet sind, **gekennzeichnet durch** folgende Merkmale:
a) der Packungsförderer (26) weist von einem Endlosförderer (27) quer abstehende Mitnehmer (28) auf zur seitlichen Begrenzung von Taschen (29) für Packungen (10),
b) die Abmessung der **durch** die Mitnehmer (28) begrenzten Tasche (29) entspricht etwa der Abmessung einer Packung (10),
c) jeder Mitnehmer (28) dient zur Abgrenzung von zwei aufeinanderfolgenden Taschen (29),
d) Packungen (10) sind **durch** einen nach unten gerichteten Fördertrum (34) des Taschenförderers (26) transportierbar, wobei die Packungen (10) während des Transports **durch** den Taschenförderer (26) auf einer feststehenden Unterlage gleitend aufliegen,
e) die **durch** den Taschenförderer (26) transportierten Packungen (10) sind jeweils an der Oberseite des Aufrechtförderers (20) aufeinanderfolgend **durch** die Mitnehmer (28) erfassbar und **durch** Querabschub förderbar,
f) im Bereich einer Umlenkung des Taschenförderers (26) sind die Packungen **durch** Öffnen der Tasche (29) an einen Übergabeförderer (46) übertragbar, der die Packungen (10) erfasst, beschleunigt und die Packungen somit aus dem Bereich des Taschenförderers (26) wegbewegt.

2. Vorrichtung nach Anspruch 1, **dadurch gekennzeichnet, dass** durch den Packungsförderer bzw. Taschenförderer (26) jeweils mindestens zwei übereinanderliegende Packungen (10) gleichzeitig von dem Aufrechtförderer (20) abschiebbar und in einer Tasche (29) transportierbar sind.

3. Vorrichtung nach Anspruch 1, **gekennzeichnet durch** folgende Merkmale:
a) im Bereich des Taschenförderers (26) sind zu beiden Seiten einer Bewegungsbahn der Packungen (10) ortsfeste Siegelorgane (18) positioniert,
b) die Siegelorgane bestehen aus mehreren in Bewegungsrichtung der Packungen (10) aufeinanderfolgenden Siegelbacken (35, 36),
c) die Siegelbacken (35, 36) sind gesondert und unabhängig voneinander quer zur Förderrichtung der Packungen (10) taktweise bewegbar unter zeitweiliger Anlage an den zugekehrten Flächen der Packungen (10).

4. Vorrichtung nach Anspruch 1, **dadurch gekennzeichnet, dass** die Siegelbacken (35, 36) versetzt zueinander angeordnete Siegelflächen (37, 38) aufweisen, derart, dass die Packungen (10) bei der Beaufschlagung durch die Siegelbacken (35, 36) in Querrichtung gegeneinander verschiebbar sind.

5. Vorrichtung nach Anspruch 4, **dadurch gekennzeichnet, dass** übereinander angeordnete Packungen bei der Beaufschlagung durch die Siegelbacken (35, 36) in Querrichtung verschiebbar sind.

6. Vorrichtung nach Anspruch 4, **dadurch gekennzeichnet, dass** nebeneinander angeordnete Packungen bei der Beaufschlagung durch die Siegelbacken (35, 36) in Querrichtung verschiebbar sind.

7. Vorrichtung nach Anspruch 4, **dadurch gekennzeichnet, dass** im Anschluss an die Siegelbacken (35, 36) Ausrichter (39) auf die Packungen (10) einwirken zur korrekten Ausrichtung derselben.

## Claims

1. An apparatus for the manufacture of cuboid-shaped packs (10), with an outer wrapper made of sealable packaging material, which can be sealed in the region of a sealing subassembly (22) on mutually opposing pack surfaces (16, 17) by laterally disposed sealing elements during transport of the packs (10) along a horizontal conveying section, it being the case that the packs (10) provided with the outer wrapper can be fed to the sealing subassembly (22) in an upright movement by means of an upright conveyor (20), and that the packs (10) can be transported in the region of lateral sealing jaws (35, 36) of the sealing subassembly (22) by means of a horizontal pack conveyor (26) with the pack surfaces being directed laterally, **characterized by** the following features:
a) for the lateral delimitation of pockets (29) for packs (10), the pack conveyor (26) has carry-along elements (28) projecting transversely from a endless conveyor (27),
b) the dimension of the pocket (29) delimited by the carry-along elements (28) corresponds approximately to the dimension of a pack (10),
c) each carry-along element (28) serves to delimit two successive pockets (29),
d) packs (10) can be transported by a downwardly directed conveying strand (34) of the pocket conveyor (26), with the packs (10) lying in slip fashion on a fixed base as they are transported by the pocket conveyor (26),
e) the packs (10) transported by the pocket conveyor (26) can in each case be gripped in succession at the top side of the upright conveyor (20) by the carry-along elements (28) and by transverse thrust,
f) in the region of a deflection of the pocket conveyor (26), the packs (10) can be transferred, by virtue of the pockets (29) being opened, to a transfer conveyor (46) which grasps the packs (10), accelerates them and transfers the packs out of the region of the pocket conveyor (26).

2. The apparatus according to Claim 1, **characterized in that** at least two packs (10) lying one above the other can be simultaneously pushed by the pack conveyor, or pocket conveyor (26) at a time from the upright conveyor (20) and transported in a pocket (29).

3. The apparatus according to Claim 1, **characterized by** the following features:
a) in the region of the pocket conveyor (26) stationary sealing elements (18) are positioned at either side of a path of movement of the packs (10),
b) the sealing elements comprise a plurality of sealing jaws (35, 36) following in succession in the path of movement of the packs (10),
c) the sealing jaws (35, 36) can be moved in cycles individually and independently from one another transverse to the conveying direction of the packs (10) with temporary abutment onto the facing surfaces of the packs (10).

4. The apparatus according to Claim 1, **characterized in that** the sealing jaws (35, 36) have mutually offset sealing surfaces (37, 38) such that, when the sealing jaws (35, 36) abut the packs (10) the latter can be displaced against each other in the transverse direction.

5. The apparatus according to Claim 4, **characterized in that** packs arranged one above the other can be displaced in the transverse direction when they are abutted by the sealing jaws (35, 36).

6. The apparatus according to Claim 4, **characterized in that** packs arranged adjacent to one above can be displaced in the transverse direction when they are abutted by the sealing jaws (35, 36).

7. The apparatus according to Claim 4, **characterized in that** following the sealing jaws (35, 36) are aligning means (39) which act on the packs (10) to produce the correct alignment of the same.

## Revendications

1. Dispositif de fabrication de paquets parallélépipédiques (10) qui comportent une enveloppe extérieure en matériau d'emballage soudable qui est soudé dans la zone d'un dispositif de soudage (22) sur des faces opposées (16, 17) des paquets par des organes de soudage placés latéralement pendant le transport des paquets (10) le long d'une voie horizontale de transport, les paquets (10) pourvus de l'enveloppe extérieure étant amenés au dispositif de soudage (22) par un transporteur vertical (20) par un mouvement ascendant, et les paquets (10) étant, dans la zone de mâchoires latérales de soudage (35, 36) du dispositif de soudage (22), transportés par un transporteur horizontal de paquets (26), les faces des paquets étant dirigées de côté, **caractérisé par** les caractéristiques suivantes :
a) le transporteur de paquets (26) présente des entraîneurs (28) qui font saillie transversalement d'un transporteur sans fin (27) et limitent latéralement des poches (29) destinées à recevoir les paquets (10),
b) la dimension de la poche (29) limitée par les entraîneurs (28) correspond à peu près à la dimension d'un paquet (10),
c) chaque entraîneur (28) délimite deux poches (29) successives,
d) les paquets (10) sont transportés par un brin dirigé vers le bas (34) du transporteur à poches (26) et, pendant leur transport par ce dernier, reposent en glissant sur un support fixe,
e) les paquets (10) transportés par le transporteur à poches (26) sont saisis sur le côté supérieur du transporteur vertical (20) les uns après les autres par les entraîneurs (28) et transportés par ripage transversal,
f) dans la zone d'un renvoi du transporteur à poches (26), les paquets sont transmis par ouverture de la poche (29) à un transporteur de transfert (46) qui saisit les paquets (10), les accélère et ainsi les éloigne de la zone du transporteur à poches (26).

2. Dispositif selon la revendication 1, **caractérisé par le fait que** le transporteur de paquets ou transporteur à poches (26) enlève chaque fois du transporteur vertical (20) au moins deux paquets (10) superposés en même temps et les transporte dans une poche (29).

3. Dispositif selon la revendication 1, **caractérisé par** les caractéristiques suivantes :
a) dans la zone du transporteur à poches (26), des organes de soudage fixes (18) sont placés de part et d'autre d'une trajectoire des paquets (10),
b) les organes de soudage sont constitués de plusieurs mâchoires de soudage (35, 36) qui se suivent dans la direction de mouvement des paquets (10),
c) les mâchoires de soudage (35, 36) sont mues de façon discontinue séparément et indépendamment les unes des autres perpendiculairement à la direction de transport des paquets (10), avec appui temporaire sur les faces en regard des paquets (10).

4. Dispositif selon la revendication 1, **caractérisé par le fait que** les mâchoires de soudage (35, 36) présentent des surfaces de soudage décalées les unes des autres (37, 38), de façon telle que les paquets (10) soient déplacés les uns par rapport aux autres dans la direction transversale lorsqu'ils sont soumis à l'action des mâchoires de soudage (35, 36)

5. Dispositif selon la revendication 4, **caractérisé par le fait que** des paquets superposés sont déplacés dans la direction transversale lorsqu'ils sont soumis à l'action des mâchoires de soudage (35, 36).

6. Dispositif selon la revendication 4, **caractérisé par le fait que** des paquets placés les uns à côté des autres sont déplacés dans la direction transversale lorsqu'ils sont soumis à l'action des mâchoires de soudage (35, 36).

7. Dispositif selon la revendication 4, **caractérisé par le fait qu'**après les mâchoires de soudage (35, 36), des aligneurs (39) agissent sur les paquets (10) pour les aligner correctement.
